# EUROPÄISCHE PATENTSCHRIFT

(11) **EP 2 197 742 B1**
(45) Veröffentlichungstag und Bekanntmachung des Hinweises auf die Patenterteilung: **20.06.2012**
(21) Anmeldenummer: 08837363.4
(22) Anmeldetag: 02.10.2008
(51) Int. Cl.: B64D 11/06

(54) **SITZ FÜR EIN VERKEHRSMITTEL**
SEAT FOR TRANSPORT VEHICLE
SIÈGE POUR UN MOYEN DE TRANSPORT

(30) Priorität: 05.10.2007 DE 102007047651
(43) Veröffentlichungstag der Anmeldung: 23.06.2010
(73) Patentinhaber: Lufthansa Technik AG, 22335 Hamburg (DE)
(72) Erfinder: MERENSKY, Harald, 22359 Hamburg (DE)
(74) Vertreter: Glawe, Delfs, Moll
(86) Internationale Anmeldenummer: PCT/EP2008/008376
(87) Internationale Veröffentlichungsnummer: WO 2009/046938

(56) Entgegenhaltungen:
- DE-A1- 19 809 426
- DE-U1- 20 111 970
- GB-A- 793 883
- US-A- 2 897 000
- US-A- 3 926 473
- US-A1- 2006 055 228

## Beschreibung

Die Erfindung betrifft einen Sitz für ein Verkehrsmittel, insbesondere für ein Flugzeug. Der Sitz, der eine Sitzfläche, eine Armlehne und eine Kinderarmlehne zusätzlich zu der Armlehne umfasst, kann einen Erwachsenenzustand und einen Kinderzustand einnehmen. Im Erwachsenenzustand ist die Kinderarmlehne in einer Staustellung und im Kinderzustand in einer Nutzstellung angeordnet. In der Nutzstellung hat die Kinderarmlehne in vertikaler Richtung einen verminderten Abstand zur Sitzfläche und in horizontaler Richtung einen verminderten Abstand zu einer gegenüberliegenden Armlehne. Im Erwachsenenzustand kann ein Erwachsener bequem auf dem Stuhl sitzen, im Kinderzustand ist der Sitz für ein Kind bestimmt.

Aus US 2006/0055228 A1 ist ein Sitz bekannt, bei dem Bügel unterschiedlicher Größe aus der Rückenlehne herausgeklappt werden können. In DE 201 11 970 U1 ist ein Sitz offenbart, bei dem ein Bügel derart aus der Armlehne herausgeschwenkt werden kann, dass er sich quer zur Armlehne erstreckt.

Bekannt sind ferner Sitze, die im Kinderzustand dazu bestimmt sind, ein Kleinkind im Alter von bis zu zwei Jahren in einem Reboard-Sitz zu transportieren. Im Kinderzustand wird der Reboard-Sitz so in Position gebracht, dass das Kleinkind entgegen der normalen Sitzrichtung in dem Reboard-Sitz untergebracht werden kann. Reboard-Sitze dieser Art sind ausschließlich für Kleinkinder geeignet. Kinder, die älter als zwei Jahre sind, können in einem Reboard-Sitz nicht untergebracht werden.

Der Erfindung liegt die Aufgabe zu Grunde, einen Sitz der eingangs genannten Art vorzustellen, der im Kinderzustand für Kinder im Alter von mehr als zwei Jahren geeignet ist. Die Aufgabe wird gelöst durch die Merkmale des Anspruchs 1. Vorteilhafte Ausführungsformen finden sich in den Unteransprüchen.

Erfindungsgemäß ist die Kinderarmlehne in Staustellung in die Kontur der Armlehne einbezogen ist.

Zunächst werden einige Begriffe erläutert. Ein Sitz umfasst eine Kinderarmlehne zusätzlich zu einer Armlehne, wenn die Armauflagefläche der Kinderarmlehne eine andere ist als die Armauflagefläche der Armlehne. Die Kinderarmlehne ist in die Kontur der Armlehne einbezogen, wenn die Kinderarmlehne in seitlicher Richtung im Wesentlichen nicht über die Armauflagefläche der Armlehne hinausragt. Zwei Armlehnen liegen einander gegenüber, wenn die Sitzfläche des Sitzes zwischen den Armlehnen angeordnet ist.

Der in der Nutzstellung verminderte Abstand der Kinderarmlehne gegenüber der Sitzfläche und der gegenüberliegenden Armlehne ist jeweils im Vergleich zur Armauflagefläche der Armlehne vermindert. Durch den verminderten Abstand zur Sitzfläche und zur gegenüberliegenden Armlehne können Kinder ihre Arme bequem auf der Armauflagefläche der Kinderarmlehne ablegen.

Für ein bequemes Sitzen reicht eine einzelne Armlehne nicht aus, vielmehr sollte auf jeder Seite des Sitzes einer Armlehne angeordnet sein. Dies kann dadurch erreicht werden, dass mehrere Sitze, die für sich genommen nur eine einzelne Armlehne aufweisen, so nebeneinander positioniert werden, dass die Armlehne jeweils von zwei benachbarten Sitzen aus benutzt werden kann. Komfortabler ist es jedoch, wenn jeder Sitz auf beiden Seiten seine eigenen Armlehnen hat, wenn er also zwei Armlehnen und zwei Kinderarmlehnen umfasst.

In der Nutzstellung ist die Armauflagefläche der Kinderarmlehne im Wesentlichen horizontal ausgerichtet, so dass ein Kind seine Arme von oben auf der Armauflagefläche ablegen kann. Für den Wechsel der Kinderarmlehne von der Nutzstellung in die Staustellung kommen verschiedene Mechanismen in Betracht. So ist es möglich, die Kinderarmlehne entlang von Führungsflächen in die Armlehne einzuschieben, wobei die Ausrichtung der Kinderarmlehne im Wesentlichen erhalten bleibt. Damit die Kinderarmlehne auf diese Weise in die Kontur der Armlehne einbezogen werden kann, ist es jedoch erforderlich, dass die Armlehne eine ausreichende Breite hat. Insbesondere bei Armlehnen mit geringerer Breite kann die Kinderarmlehne in der Staustellung auch so angeordnet sein, dass die Armauflagefläche im Wesentlichen vertikal angeordnet ist. Zum Wechseln zwischen der Staustellung und der Nutzstellung kann die Kinderarmlehne dann um eine zu der Armlehne parallele Achse geschwenkt werden. Vorzugsweise wird die Kinderarmlehne aus der Nutzstellung in die Staustellung nach oben geschwenkt, so dass die Armauflagefläche der Kinderarmlehne in der Staustellung im Inneren der Armlehne angeordnet ist. Die der Armauflagefläche gegenüberliegende Unterseite der Kinderarmlehne kann dann so gestaltet sein, dass sie sich in der Staustellung optisch gut in die Armlehne einfügt. Von der Erfindung umfasst sind auch Kombinationen aus Schwenk- und Schiebemechanismen.

Es kann eine Halteeinrichtung vorgesehen sein, die die Kinderarmlehne auch dann sicher in der Staustellung hält, wenn das Verkehrsmittel Turbulenzen ausgesetzt ist. Die Halteeinrichtung kann einen Mechanismus umfassen, bei dem beispielsweise ein mit der Kinderarmlehne verbundenes Element in eine Hinterschneidung der Armlehne eingreift. In einer vorteilhaften Ausführungsform ist ein mit einem Metallelement zusammenwirkender Magnet vorgesehen, um die Kinderarmlehne in der Staustellung zu halten. Ein solcher Verschluss ist nahezu verschleißfrei. Um die Kinderarmlehne aus der Staustellung zu lösen, muss die Magnetkraft überwunden werden. Es kann dazu ein Handgriff an der Kinderarmlehne vorgesehen sein, an dem die Bedienperson direkt in der Staustellung angreifen kann. Optisch ansprechender ist es jedoch, wenn sich die Kinderarmlehne in der Staustellung möglichst glattflächig in die Armlehne einfügt. Um den Magneten dennoch lösen zu können, kann es vorgesehen sein, dass die Kinderarmlehne zunächst in Zwischenstellung zwischen der Staustellung und der Nutzstellung gebracht wird, so dass die Kinderarmlehne hintergriffen werden kann. Für den Wechsel zwischen der Staustellung und der Zwischenstellung kann ein Mechanismus vorgesehen sein, der in beide Bewegungsrichtungen durch einen Druck auf die Unterseite der Kinderarmlehne betätigt wird.

Der Sitzkomfort für das Kind kann weiter verbessert werden, wenn die Länge der Sitzfläche an die Größe des Kindes angepasst werden kann. Die Länge der Sitzfläche bezieht sich auf die Richtung, entlang derer die Oberschenkel bei normalem Sitzen ausgerichtet sind. Die Länge der Sitzfläche kann bei fester Größe des Sitzkissens dadurch verstellt werden, dass das Sitzkissen relativ zur Rückenlehne des Sitzes verschoben wird.

Ebenfalls möglich ist es, dass ein hinteres Segment der Sitzfläche relativ zur Rückenlehne in einer festen Position angeordnet ist. Die Sitzfläche umfasst dann weitere Segmente, wobei die Segmente so relativ zueinander bewegt werden können, dass sich dadurch die Länge der Sitzfläche verändert. Beispielsweise können die Segmente in der Ebene der Sitzfläche relativ zueinander verschiebbar sein. Ebenfalls möglich ist es, dass ein Segment um eine quer zur Sitzfläche ausgerichtete Achse aus der Ebene der Sitzfläche herausgeschwenkt werden kann. Um ein Einstellen der Länge der Sitzfläche in mehreren Stufen zu ermöglichen, kann eine Mehrzahl von Segmenten vorgesehen sein, die einzeln oder gemeinsam aus der Ebene der Sitzfläche herausgeschwenkt werden können.

Der vertikale Abstand zwischen der Sitzfläche und dem Boden ist so bemessen, dass ein Erwachsener seine Füße bequem auf dem Boden abstellen kann. Für den Kinderzustand kann eine Fußstütze vorgesehen sein, die einen geringeren vertikalen Abstand zu der Sitzfläche hat. Der vertikale Abstand zwischen der Sitzfläche und der Fußstütze kann einstellbar sein. Um die Fußstütze an unterschiedliche Längen der Sitzfläche anpassen zu können, kann die Position der Fußstütze in horizontaler Richtung einstellbar sein. Die Einstellmöglichkeiten in vertikaler und in horizontaler Richtung können entweder unabhängig voneinander oder miteinander gekoppelt sein. Im Erwachsenenzustand ist die Fußstütze so angeordnet, dass der Erwachsene nicht behindert wird, wenn er seine Füße vor der Sitzfläche auf den Boden stellt.

Der erfindungsgemäße Sitz kann beispielsweise in Flugzeugen, Bussen oder Bahnen verwendet werden.

Damit das Kind während der Reise betreut werden kann, ist es vorteilhaft, wenn ein erfindungsgemäßer Sitz neben einem üblichen, für Erwachsene bestimmten Sitz angeordnet ist. Auf der anderen Seite des üblichen Sitzes kann ein dritter Sitz angeordnet sein, der dazu ausgelegt ist, zwischen einem Erwachsenenzustand und einem Kinderzustand zu wechseln. Die beiden äußeren Sitze können in den Kinderzustand gebracht werden. Ein in der Mitte sitzender Erwachsener kann zwei auf den äußeren Sitzen untergebrachte Kinder betreuen. Der dritte Sitz kann ebenfalls ein erfindungsgemäßer Sitz sein. Der dritte Sitz kann aber auch ein Sitz sein, der im Kinderzustand einen Reboard-Sitz für Kleinkinder im Alter von unter zwei Jahren bietet. Eine solche Sitzanordnung ist für den häufigen Fall ausgelegt, dass ein Erwachsener die Reise zusammen mit zwei Kindern unternimmt.

In größeren Flugzeugen sind die Sitze häufig in Vierergruppen angeordnet, wobei solche Vierergruppen gerne von Elternpaaren mit zwei Kindern angenommen werden. Für diese Zielgruppe ist es vorteilhaft, wenn die Vierergruppe zwei Sitze umfasst, die außer einem Erwachsenenzustand einen Kinderzustand einnehmen können. Die Sitze für die Eltern können zwischen den Sitzen für die Kinder angeordnet sein, es sind aber auch andere Anordnungen möglich.

Die Erfindung wird nachfolgend unter Bezugnahme auf die beigefügten Zeichnungen anhand einer vorteilhaften Ausführungsform beispielhaft beschrieben. Es zeigen:
- Fig. 1: eine Sitzanordnung aus einem erfindungsgemäßen Sitz und einem üblichen Sitz;
- Fig. 2: eine Armlehne mit einer Kinderarmlehne in Staustellung;
- Fig. 3: eine Armlehne mit einer Kinderarmlehne in Nutzstellung;

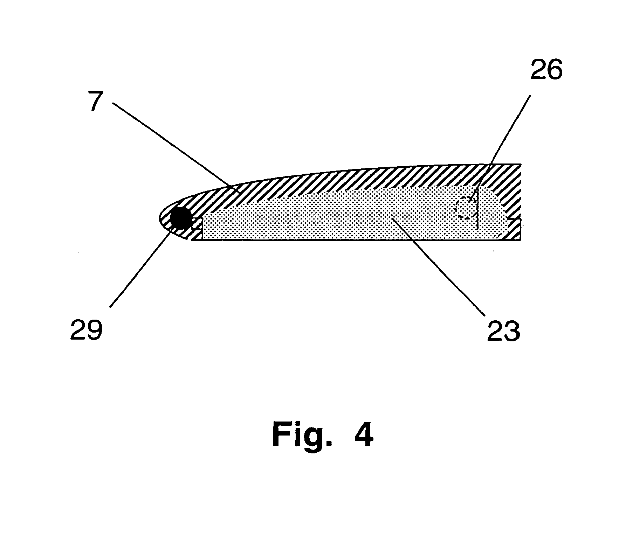

- Fig. 4: die Armlehne aus Fig. 2 in einer Seitenansicht;
- Fig. 5: einen erfindungsgemäßen Sitz im Erwachsenenzustand;
- Figuren 6 - 8:: den Sitz aus Fig. 5 in verschiedenen Kinderzuständen.

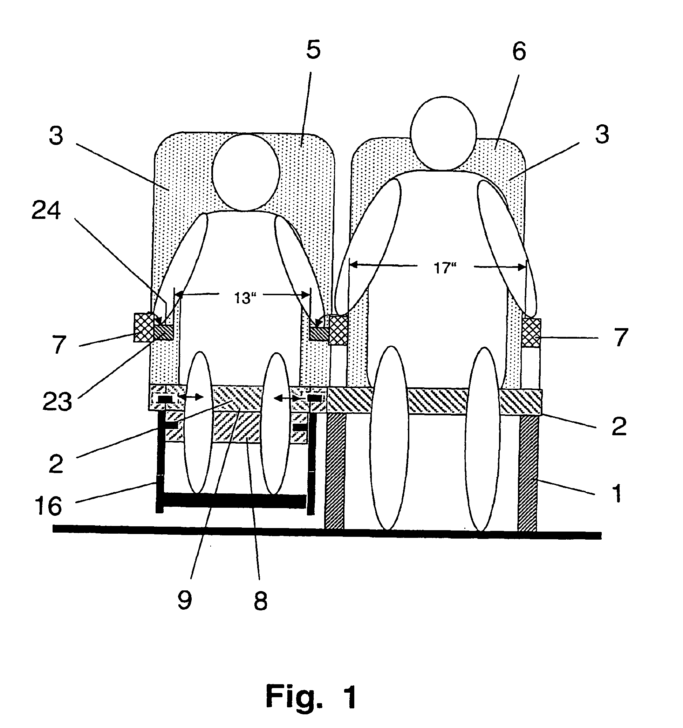

Die in Fig. 1 dargestellten Sitze 5, 6 weisen ein bei 1 angedeutetes Grundgestell auf, mit dem sie am Boden einer Flugzeugkabine befestigt sind. Die Sitze umfassen jeweils eine Sitzfläche 2 und eine Rückenlehne 3. Die Rückenlehnen 3 sind gegenüber den Sitzflächen 2 in bekannter Weise in der Neigung verstellbar. Der Sitz 6 ist ein üblicher Sitz, der so bemessen ist, dass ein Erwachsener bequem darauf sitzen kann. Der Sitz 5 ist ein erfindungsgemäßer Sitz im Kinderzustand.

Der Sitz 5 umfasst auf beiden Seiten jeweils eine Armlehne 7 und eine Kinderarmlehne 23. Das auf dem Sitz 5 sitzende Kind hat seine Arme auf den Armauflageflächen 24 der Kinderarmlehnen 7 abgelegt. Die Füße des Kindes ruhen auf einer Fußstütze 16. Die Sitzfläche 2 des Sitzes 5 ist verkürzt, so dass sie an die Oberschenkellänge des Kindes angepasst ist. Um den Sitz 5 in den Erwachsenenzustand zu bringen, werden die Kinderarmlehnen 23 so nach oben geschwenkt, dass sie in die Kontur der Armlehnen 7 einbezogen sind, die Fußstützen 16 werden nach hinten geschwenkt und die Sitzfläche 2 wird auf ihre volle Länge verlängert.

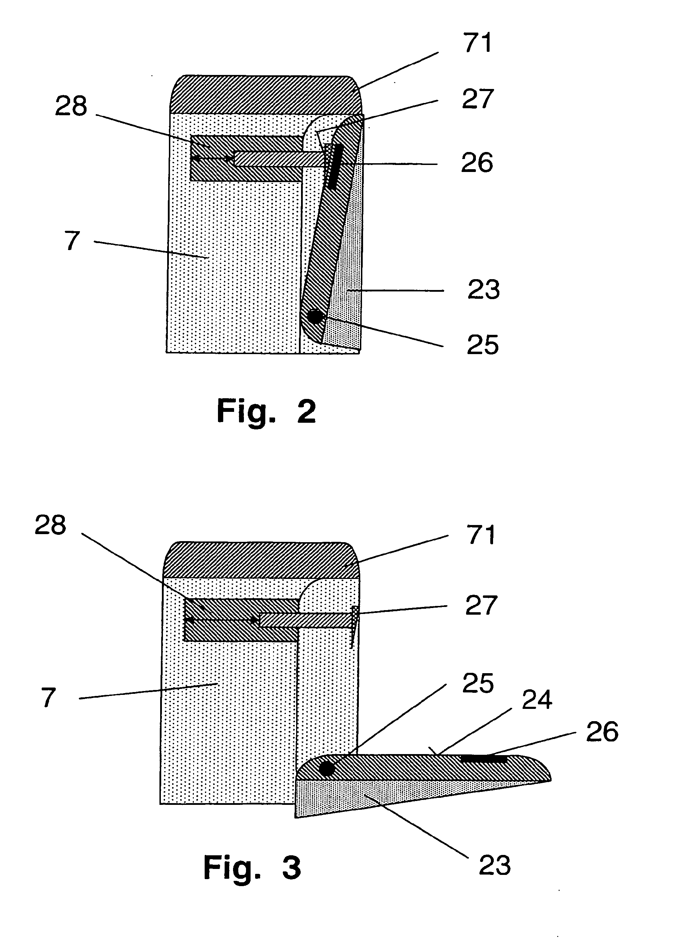

In der Staustellung ist die Kinderarmlehne 23 gemäß Fig. 2 in die Kontur der Armlehne 7 einbezogen. Die Kinderarmlehne 23 ragt also zur Seite hin im Wesentlichen nicht über die Armauflagefläche 71 der Armlehne 7 hinaus. Die Kinderarmlehne 23 wird um eine Achse 25 geschwenkt, um sie in die in Fig. 3 gezeigte Nutzstellung zu bringen, in der das Kind seine Arme auf der Armauflagefläche 24 ablegen kann.

Die Kinderarmlehne 23 wird durch einen Magneten 26, der mit einem Metallteil 27 zusammenwirkt in der Staustellung gehalten. Das Metallteil 27 ist an einem Mechanismus 28 angebracht, der zwei Stellungen einnehmen kann. In der in Fig. 2 gezeigten Stellung hält der Mechanismus 28 die Kinderarmlehne 23 so, dass sie bündig mit der Armlehne 7 abschließt. In der in Fig. 3 gezeigten Stellung hält der Mechanismus die Kinderarmlehne 23 in einer Zwischenstellung, so dass sie hintergriffen werden kann, um den Magnet 26 von dem Metallteil 27 zu lösen. Um den Mechanismus von der einen Stellung in die andere zu bringen, wird jeweils über die Kinderarmlehne 23 ein Druckimpuls auf das Metallteil 27 ausgeübt. Über den Betätigungsknopf 29 kann die Neigung der Rückenlehne 3 des Sitzes 5 verändert werden.

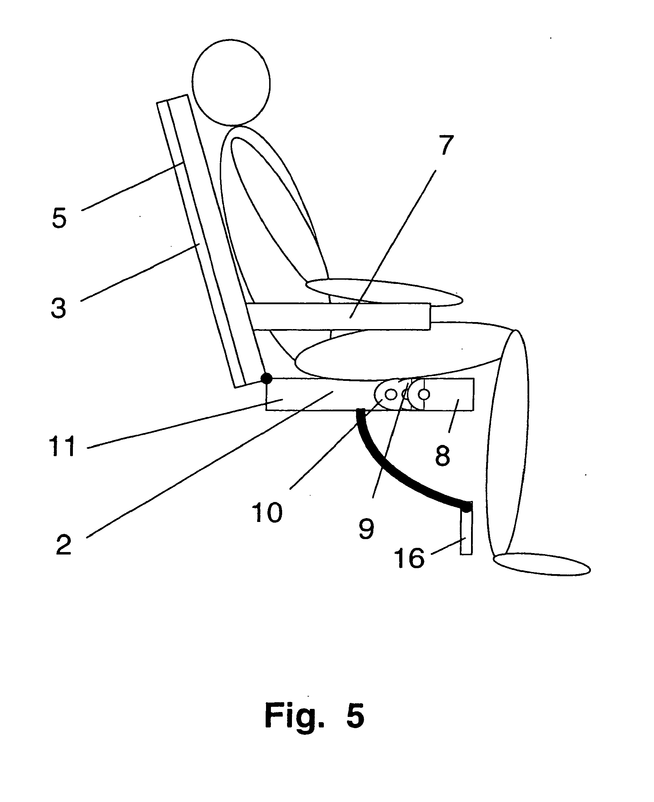

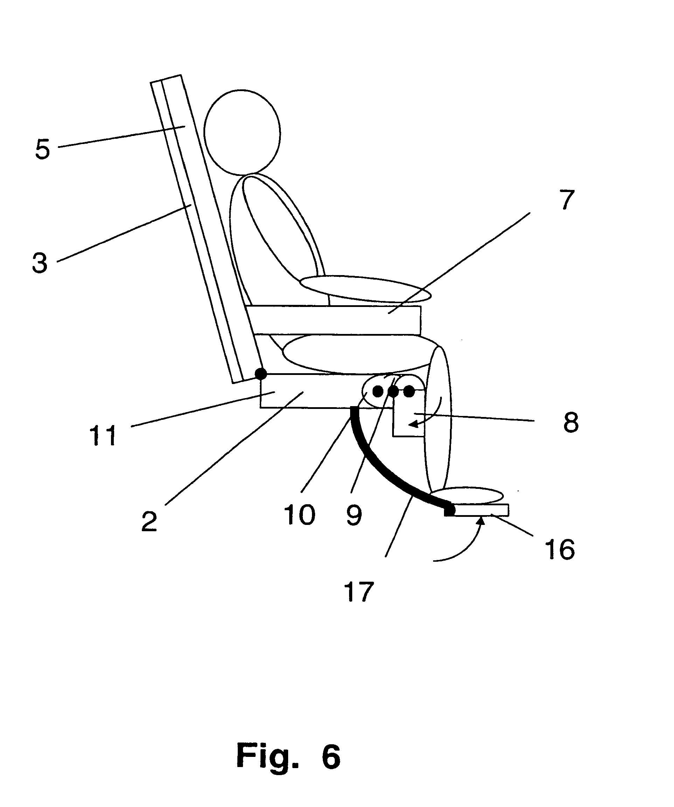

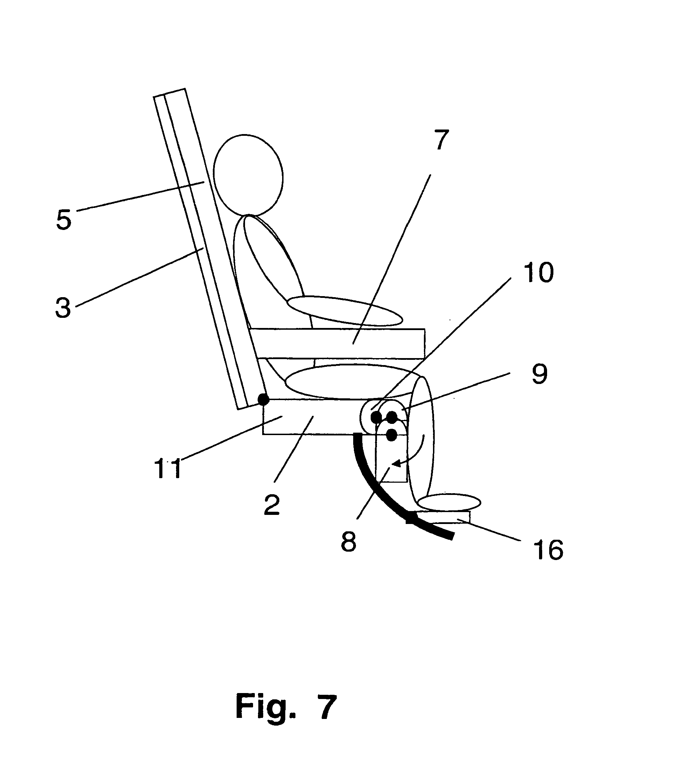

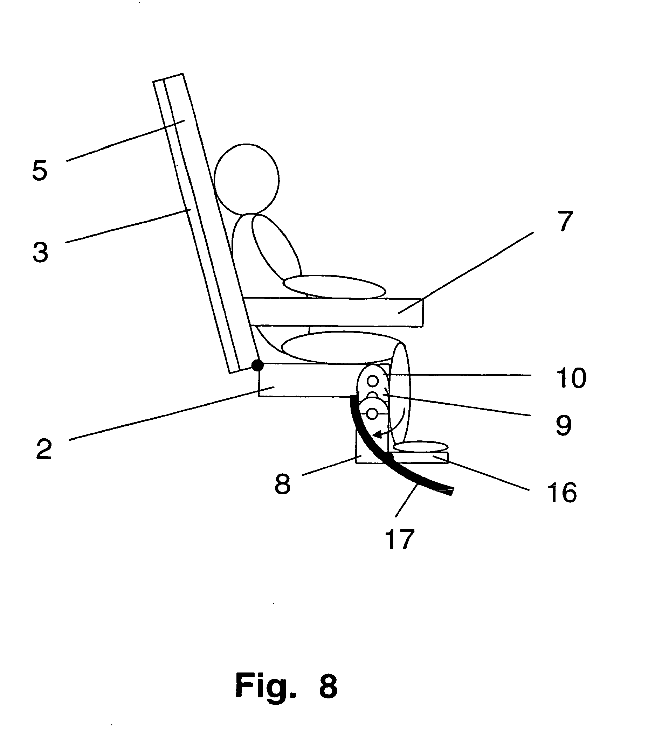

Fig. 5 zeigt den erfindungsgemäßen Sitz 5 im Erwachsenenzustand. Die Sitzfläche 2 hat ihre volle Länge, die Fußstütze 16 ist nach hinten geschwenkt. Auf dem Sitz 5 sitzt ein Erwachsener mit einer Körpergröße von 1,75 m. In den Figuren 6 bis 8 ist der Sitz 5 in verschiedenen Kinderzuständen dargestellt. In Fig. 6 ist der Sitz 5 für ein Kind mit einer Körpergröße von 1,16 m ausgelegt, in Fig. 7 für ein Kind mit einer Körpergröße von 1,04 m und in Fig. 8 für ein Kind mit einer Körpergröße von 0,92 m. Die Größenangaben sind die statistischen Durchschnittsgrößen von sechsjährigen, vierjährigen und zweijährigen Kindern.

Die Sitzfläche 2 umfasst drei bewegliche Segmente 8, 9, 10, die einzeln oder in Gruppen nach unten geschwenkt werden können. Durch die Segmente 8, 9, 10 kann die Länge der Sitzfläche 2 in mehreren Stufen eingestellt werden. Ein hinteres Segment 11 der Sitzfläche 2 ist in fester Position relativ zu der Rückenlehne 3 angeordnet.

Die Fußstütze 16 ist in gekrümmten Führungsschienen 17 geführt und kann in verschiedenen Positionen in den Führungsschienen 17 arretiert werden, wobei sich die Position der Fußstütze 16 sowohl in horizontaler als auch in vertikaler Richtung ändert. Durch die Krümmung der Führungsschienen 17 ist die vertikale Position der Fußstütze 16 mit der horizontalen Position gekoppelt. Im Erwachsenenzustand ist die Fußstütze 16 so nach hinten geschwenkt, dass der Erwachsene seine Füße ungehindert auf dem Boden abstellen kann.

## Patentansprüche

1. Sitz für ein Verkehrsmittel, der eine Sitzfläche (2), eine Armlehne (7) und eine Kinderarmlehne (23) zusätzlich zu der Armlehne (7) umfasst und der einen Erwachsenenzustand sowie einen Kinderzustand einnehmen kann, wobei die Kinderarmlehne (23) im Erwachsenenzustand in einer Staustellung angeordnet ist, wobei die Kinderarmlehne (23) im Kinderzustand in einer Nutzstellung angeordnet ist, und wobei die Kinderarmlehne (23) in der Nutzstellung in horizontaler Richtung einen Abstand zu einer gegenüberliegenden Armlehne (7) hat, der vermindert ist verglichen mit dem Abstand zwischen der Armlehne (7) und der gegenüberliegenden Armlehne, **dadurch gekennzeichnet, dass** die Armauflagefläche der Kinderarmlehne (23) in der Nutzstellung in vertikaler Richtung einen Abstand zur Sitzfläche (2) hat, der vermindert ist verglichen mit dem Abstand zwischen der Armauflagefläche der Armlehne (7) und der Sitzfläche (2), und, dass die Kinderarmlehne (23) in der Staustellung in die Kontur der Armlehne (7) einbezogen ist.

2. Sitz nach Anspruch 1, **dadurch gekennzeichnet, dass** er zwei Armlehnen (7) und zwei Kinderarmlehnen (23) umfasst.

3. Sitz nach Anspruch 1 oder 2, **dadurch gekennzeichnet, dass** die Kinderarmlehne (23) eine Armauflagefläche (24) aufweist und dass die Armauflagefläche (24) im Stauzustand im Wesentlichen vertikal angeordnet ist.

4. Sitz nach einem der Ansprüche 1 bis 3, **dadurch gekennzeichnet, dass** die Kinderarmlehne (23) durch Schwenken um eine zur Armlehne (7) parallele Achse (25) zwischen der Staustellung und der Nutzstellung wechselt.

5. Sitz nach einem der Ansprüche 1 bis 4, **dadurch gekennzeichnet, dass** ein mit einem Metallelement (27) zusammenwirkender Magnet (26) vorgesehen ist, um die Kinderarmlehne (23) in der Staustellung zu halten.

6. Sitz nach Anspruch 5, **dadurch gekennzeichnet, dass** die Kinderarmlehne (23) zum Lösen des Magneten (26) von dem Metallelement (27) in eine Zwischenstellung zwischen der Staustellung und der Nutzstellung gebracht wird.

7. Sitz nach einem der Ansprüche 1 bis 6, **dadurch gekennzeichnet, dass** die Länge der Sitzfläche (2) verstellbar ist.

8. Sitz nach Anspruch 7, **dadurch gekennzeichnet, dass** die Sitzfläche mehrere Segmente (8, 9, 10, 11) umfasst und dass die Segmente (8, 9, 10, 11) relativ zueinander beweglich sind.

9. Sitz nach Anspruch 8, **dadurch gekennzeichnet, dass** ein Segment (8, 9, 10) um eine quer zur Sitzfläche ausgerichtete Achse schwenkbar ist.

10. Sitz nach einem der Ansprüche 1 bis 9, **dadurch gekennzeichnet, dass** er eine Fußstütze (16) umfasst und dass der Abstand zwischen der Sitzfläche (2) und der Fußstütze (16) in vertikaler Richtung einstellbar ist.

11. Sitz nach Anspruch 10, **dadurch gekennzeichnet, dass** die Fußstütze (16) in horizontaler Richtung verstellbar ist.

12. Sitzanordnung umfassend einen ersten Sitz (5) und einen seitlich neben dem ersten Sitz (5) angeordneten zweiten Sitz (6), wobei der erste Sitz (5) gemäß einem der Ansprüche 1 bis 7 ausgebildet ist und wobei der zweite Sitz (6) ein für Erwachsene bestimmter Sitz für ein Verkehrsmittel ist.

13. Sitzanordnung nach Anspruch 12, **dadurch gekennzeichnet, dass** sie einen dritten Sitz umfasst, dass der dritte Sitz einen Reboardsitz aufweist und dass der zweite Sitz (6) in seitlicher Richtung zwischen dem ersten Sitz (5) und dem dritten Sitz angeordnet ist.

## Claims

1. Seat for a transport vehicle which comprises a seat surface (2), an armrest (7) and a child armrest (23) in addition to the armrest (7), and which may adopt an adult position as well as a child position, in the adult position the child armrest (23) being arranged in a stowed position and in the child position the child armrest (23) being arranged in a use position, and in the use position the child armrest (23) having a spacing from an opposing armrest (7) in the horizontal direction, which spacing is reduced compared to the spacing between the armrest (7) and the opposing armrest, **characterized in that** in the use position the arm support surface of the child armrest (23) has a spacing from the seat surface (2) in the vertical direction, which spacing is reduced compared to the spacing between the arm support surface of the armrest (7) and the seat surface (2), and **in that** the stowed position the child armrest (23) is incorporated in the contour of the armrest (7).

2. Seat according to Claim 1, **characterized in that** it comprises two armrests (7) and two child armrests (23) .

3. Seat according to Claim 1 or 2, **characterized in that** the child armrest (23) comprises an arm support surface (24), and **in that** the arm support surface (24) is arranged substantially vertically in the stowed position.

4. Seat according to one of Claims 1 to 3, **characterized in that** the child armrest (23) alternates between the stowed position and the use position by pivoting about an axis (25) parallel to the armrest (7).

5. Seat according to one of Claims 1 to 4, **characterized in that** a magnet (26) cooperating with a metal element (27) is provided, in order to hold the child armrest (23) in the stowed position.

6. Seat according to Claim 5, **characterized in that** for releasing the magnet (26) from the metal element (27) the child armrest (23) is moved into an intermediate position between the stowed position and the use position.

7. Seat according to one of Claims 1 to 6, **characterized in that** the length of the seat surface (2) may be adjusted.

8. Seat according to Claim 7, **characterized in that** the seat surface comprises a plurality of segments (8, 9, 10, 11) and **in that** the segments (8, 9, 10, 11) are able to be moved relative to one another.

9. Seat according to Claim 8, **characterized in that** a segment (8, 9, 10) may be pivoted about an axis aligned transversely to the seat surface.

10. Seat according to one of Claims 1 to 9, **characterized in that** it comprises a foot support (16) and **in that** the spacing between the seat surface (2) and the foot support (16) may be adjusted in the vertical direction.

11. Seat according to Claim 10, **characterized in that** the foot support (16) may be adjusted in the horizontal direction.

12. Seating arrangement comprising a first seat (5) and a second seat (6) arranged to the side adjacent to the first seat (5), the first seat (5) being configured according to one of Claims 1 to 7, and the second seat (6) being intended as a seat for adults for a transport vehicle.

13. Seating arrangement according to Claim 12, **characterized in that** it comprises a third seat, **in that** the third seat comprises a reboard seat and **in that** the second seat (6) in the lateral direction is arranged between the first seat (5) and the third seat.

## Revendications

1. Siège pour un moyen de transport qui comprend une surface d'assise (2), un accoudoir (7) et un accoudoir pour enfant (23) en plus de l'accoudoir (7) et qui peut adopter un état adapté à l'adulte ainsi qu'un état adapté à l'enfant, l'accoudoir pour enfant (23) étant agencé dans une position repliée dans l'état adapté à l'adulte, l'accoudoir pour enfant (23) étant agencé dans une position d'utilisation dans l'état adapté à l'enfant et l'accoudoir pour enfant (23) présentant, en position d'utilisation, dans le sens horizontal, un écartement par rapport à un accoudoir opposé (7) qui est réduit comparé à l'écartement existant entre l'accoudoir (7) et l'accoudoir opposé, **caractérisé en ce que** la surface d'appui du bras de l'accoudoir pour enfant (23) a, en position d'utilisation, dans le sens vertical, un écartement par rapport à la surface d'assise (2) qui est réduit comparé à l'écartement existant entre la surface d'appui du bras de l'accoudoir (7) et la surface d'assise (2) et l'accoudoir pour enfant (23) est incorporé au contour de l'accoudoir (7) en position repliée.

2. Siège selon la revendication 1, **caractérisé en ce qu'**il comprend deux accoudoirs (7) et deux accoudoirs pour enfant (23).

3. Siège selon la revendication 1 ou 2, **caractérisé en ce que** l'accoudoir pour enfant (23) présente une surface d'appui du bras (24) et **en ce que** la surface d'appui du bras (24) est disposée de manière sensiblement verticale à l'état replié.

4. Siège selon l'une quelconque des revendications 1 à 3, **caractérisé en ce que** l'accoudoir pour enfant (23) passe de la position repliée à la position d'utilisation et inversement par pivotement autour d'un axe (25) parallèle à l'accoudoir (7).

5. Siège selon l'une quelconque des revendications 1 à 4, **caractérisé en ce qu'**on a prévu un aimant (26) collaborant avec un élément métallique (27) pour maintenir l'accoudoir pour enfant (23) en position repliée.

6. Siège selon la revendication 5, **caractérisé en ce que** l'accoudoir (23) est amené, pour détacher l'aimant (26) de l'élément métallique (27), dans une position intermédiaire entre la position repliée et la position d'utilisation.

7. Siège selon l'une quelconque des revendications 1 à 6, **caractérisé en ce que** la longueur de la surface d'assise (2) est réglable.

8. Siège selon la revendication 7, **caractérisé en ce que** la surface d'assise comporte plusieurs segments (8, 9, 10, 11) et **en ce que** les segments (8, 9, 10, 11) sont mobiles les uns par rapport aux autres.

9. Siège selon la revendication 8, **caractérisé en ce qu'**un segment (8, 9, 10) peut être pivoté autour d'un axe orienté perpendiculairement à la surface d'assise.

10. Siège selon l'une quelconque des revendications 1 à 9, **caractérisé en ce qu'**il comprend un appui pour les pieds (16) et **en ce que** l'écartement entre la surface d'assise (2) et l'appui pour les pieds (16) peut être réglé dans le sens vertical.

11. Siège selon la revendication 10, **caractérisé en ce que** l'appui pour les pieds (16) peut être réglé dans le sens horizontal.

12. Système de siège comportant un premier siège (5) et un second siège (6) disposé latéralement à côté du premier siège (5), le premier siège (5) étant réalisé selon l'une quelconque des revendications 1 à 7 et le second siège (6) étant un siège de moyen de transport conçu pour des adultes.

13. Système de siège selon la revendication 12, **caractérisé en ce qu'**il comporte un troisième siège, **en ce que** le troisième siège présente un siège dos à la route et **en ce que** le second siège (6) est disposé entre le premier siège (5) et le troisième siège dans le sens latéral.
